# EUROPÄISCHE PATENTSCHRIFT

(11) **EP 1 918 148 B1**
(45) Veröffentlichungstag und Bekanntmachung des Hinweises auf die Patenterteilung: **27.04.2011**
(21) Anmeldenummer: 07021091.9
(22) Anmeldetag: 29.10.2007
(51) Int. Cl.: B60J 7/22

(54) **Mehrteiliges Windschott und Cabriolet mit einem solchen Windschott**
Multi-part wind deflector and convertible with such a wind deflector
Pare-brise pluripartite et cabriolet avec un pare-brise de ce type

(30) Priorität: 04.11.2006 DE 102006052095
(43) Veröffentlichungstag der Anmeldung: 07.05.2008
(73) Patentinhaber: Dr. Ing. h.c. F. Porsche AG, 70435 Stuttgart (DE)
(72) Erfinder: Froeschle, Mathias, 73760 Ostfildern (DE); Lorenz, Florian, 22359 Hamburg (DE)

(56) Entgegenhaltungen:
- DE-A1- 4 119 529
- DE-A1- 19 728 453
- US-A1- 2002 041 111

## Beschreibung

Die vorliegende Erfindung betrifft ein Windschott gemäß dem Oberbegriff des Anspruchs 1 und ein Cabriolet mit einem solchen Windschott.

Ein derartiges Windschott ist aus der DE 41 19 529 A1 bekannt. Es besitzt rahmenartige Seitenteile, die jeweils um eine Schwenkachse zwischen einer Wirk- und Ruhestellung bewegbar sind. An den Seitenteilen ist ein flexibles Flächengebilde dauerhaft befestigt. Werden die Seitenteile in die aufgestellte Wirkstellung geschwenkt, wird zwischen ihnen als Mittelteil das flexible Flächengebilde aufgespannt, das auch die Seitenteile bedeckt.

Aus der DE 197 05 682 A1 sind ein solches Windschott und ein solches Cabriolet bekannt. Das bekannte Windschott weist einen Mittelteil auf, an dem zwei Seitenteile angeordnet sind. Die beiden Seitenteile können fest an dem Mittelteil angeformt oder klappbar mit diesem verbunden sein. Das Windschott kann zusammen mit Kopfstützen des Cabriolets aus einer versenkten Position in eine hochgefahrene Position gebracht werden. Dazu sind die Kopfstützen an dem Windschott befestigt.

Aus der US 2002/0041111 A1 sind ein Windschott und ein Cabriolet bekannt, das einen Mittelteil aufweist, an dem zwei Seitenteile angebracht sind, die in vorgegebene Positionen klappbar sind. In einer ersten Position können die Seitenteile in Querrichtung des Cabriolets nach außen geklappt werden, so dass sie zusammen mit dem Mittelteil in einer Ebene liegen. In einer zweiten Position sind die Seitenteile gegenüber dem Mittelteil nach vorne geklappt. In einer dritten Position sind die Seitenteile eingeklappt und liegen parallel zu dem Mittelteil.

Die nachveröffentlichte EP 1 864 841 A2 zeigt ein Windschott mit einem Mittelteil und zwei Seitenteilen, wobei das Mittelteil um eine parallel zur Richtung der Fahrzeugbreite verlaufende Schwenkachse zwischen einer Ruhe- und Wirkstellung verschwenkbar ist. Die Seitenteile können um eine fahrzeugfeste Schwenkachse an der Karosserie zwischen der Wirk- und Ruhestellung bewegt werden. Die Schwenkrichtungen von Seitenteil und Mittelteil können unterschiedlich sein. Mittel- und Seitenteile weisen einen Rahmen auf und sind mit einem Flächengebilde bespannt.

Es ist die Aufgabe der vorliegenden Erfindung, ein Aufstellen eines Windschott in eine Wirkstellung, in der es einen Windschutz gewährleistet, und ein Absenken des Windschotts in eine Ruhestellung auf technisch einfache Weise zu ermöglichen.

Diese Aufgabe wird gemäß der technischen Lehre des Anspruchs 1 oder des Anspruchs 13 gelöst. Vorteilhafte Ausgestaltungen der Erfindung können den abhängigen Ansprüchen entnommen werden.

Erfindungsgemäß ist der Mittelteil mit einem Rahmen versehen, an dem ein Flächengebilde aufgespannt ist. Auch die zwei Seitenteile besitzen einen Rahmen. Mittelteil und Seitenteile sind so ausgestaltet und angeordnet, dass sie zum Aufstellen des Windschotts in seine Wirkstellung und zum Absenken des Windschotts in seine Ruhestellung mit unterschiedlichen Bewegungsabläufen verfahrbar sind. Dadurch ist es vorteilhafterweise möglich, das Windschott in seiner Ruhestellung kompakt anzuordnen, so dass es wenig Platz im Cabriolet benötigt. Ferner kann das Windschott komfortabel von seiner Wirkstellung in seine Ruhestellung, und umgekehrt, betätigt werden. Die unterschiedlichen Bewegungsabläufe umfassen insbesondere unterschiedliche Bewegungsrichtungen von Mittelteil einerseits und Seitenteilen andererseits. Durch die mehrteilige Ausgestaltung des Windschotts kann ein besonders guter Windschutz gewährleistet werden. Die Seitenteile sind in der Wirkstellung des Windschotts, in seiner Längsrichtung betrachtet, insbesondere seitlich den beiden Enden des Mittelteils benachbart angeordnet. Der Mittelteil ist so ausgestaltet und angeordnet, dass zum Aufstellen des Windschotts in seine Wirkstellung und zum Absenken des Windschotts in seine Ruhestellung eine Translationsbewegung ausführbar ist. Dies ermöglicht ein einfaches und kontrolliertes Aufstellen und Absenken des Mittelteils.

In einer vorteilhaften Ausgestaltung der Erfindung sind die zwei Seitenteile schwenkbar gelagert, so dass zum Aufstellen des Windschotts in seine Wirkstellung und zum Absenken des Windschotts in seine Ruhestellung Rotationsbewegungen ausführbar sind. Dies ermöglicht ein einfaches Aufstellen und Absenken der Seitenteile.

Vorzugsweise sind die zwei Seitenteile so ausgestaltet und gelagert, dass die Rotationsbewegung des einen Seitenteils in eine Richtung ausführbar ist, die einer Richtung der Rotationsbewegung des anderen Seitenteils entgegengesetzt ist. Die Rotationsbewegungen der beiden Seitenteile sind dabei insbesondere so ausführbar, dass die beiden Seitenteile beim Verfahren des Windschotts in seine Ruhestellung in Längsrichtung des Windschotts nach innen und beim Verfahren des Windschotts in seine Wirkstellung in Längsrichtung des Windschotts nach außen verschwenkbar sind. Dies ermöglicht ein besonders einfaches Verfahren der Seitenteile und ein besonders kompaktes Anordnen der Seitenteile im Cabriolet in der Ruhestellung des Windschotts.

In einer besonders bevorzugten Ausgestaltung der Erfindung ist der Mittelteil mittels Kopplungsmitteln mit den Seitenteilen gekoppelt. Durch die Kopplungen der beiden Seitenteile mit dem Mittelteil kann ein Verfahren der Seitenteile auf den Mittelteil, oder umgekehrt, übertragen werden. Dies ermöglicht eine besonders einfache und kostengünstige Ausgestaltung eines Mechanismus zum Verfahren des Windschotts. Die Kopplungsmittel können vorteilhafterweise so ausgestaltet und angeordnet sein, dass mit ihnen die Bewegungsabläufe der Seitenteile in den Bewegungsablauf des Mittelteils übersetzbar sind, oder umgekehrt. Die Kopplungsmittel unterstützen somit die unterschiedlichen Bewegungsabläufe von Seitenteilen und Mittelteil.

Besonders vorteilhaft sind zwei Betätigungsmittel zum Betätigen des Windschotts vorhanden, um dieses in seine Wirkstellung aufzustellen und in seine Ruhestellung abzusenken. Das eine Betätigungsmittel ist dabei dem einen Seitenteil und das andere Betätigungsmittel dem anderen Seitenteil zugeordnet. Das Aufstellen und Absenken des Windschotts kann dadurch vorteilhafterweise besonders stabil und zuverlässig durchgeführt werden. Bevorzugt greifen die Betätigungsmittel an den Seitenteilen an.

Besonders bevorzugt weisen die Betätigungsmittel jeweils ein Gestänge auf. Solche Gestänge sind kostengünstig zu realisieren und zu montieren. Ferner lassen sich mit ihnen mit wenig Aufwand funktionssichere, kompakte und leichte Betätigungsmittel aufbauen. Die Gestänge sind insbesondere bewegliche Gestänge, deren Positionen oder Stellungen innerhalb des Windschotts veränderbar sind. Die beweglichen Gestänge können durch ihr Bewegen besonders gut zum Übertragen von Kräften dienen.

Bevorzugt sind die Betätigungsmittel mit wenigstens einem Antrieb verbunden. Dadurch kann das Windschott komfortabel und weitgehend automatisch aufgestellt und abgesenkt werden.

In einer besonders vorteilhaften Ausgestaltung sind die Betätigungsmittel zusätzlich als Kopplungsmittel ausgestaltet. Dadurch können die Betätigungsmittel gleichzeitig zwei Funktionen übernehmen. Dies begrenzt die Anzahl der erforderlichen Teile und den Montageaufwand.

In einer weiteren vorteilhaften Ausgestaltung weisen die Betätigungsmittel jeweils mehrere Zahnräder auf, die ineinander greifen und zum Bewegen eines der Seitenteile und des Mittelteils dienen. Mit den Zahnrädern kann ein besonders stabiles und funktionssicheres Aufstellen und Absenken des Windschotts gewährleistet werden.

Besonders bevorzugt weisen die Betätigungsmittel jeweils ein Seil auf, das über Umlenkrollen geführt ist, und zum Bewegen eines der Seitenteile und des Mittelteils dient. Das Seil ist besonders kostengünstig, wartungsarm und einfach zu montieren. Das Seil kann beispielsweise ein Drahtseil sein.

Vorzugsweise weisen die Seitenteile Wirkflächen auf, die zum Gewährleisten des Windschutzes dienen. Dabei sind die Seitenteile so ausgestaltet, dass ihre Wirkflächen in Richtung einer Vorwärts-Fahrtrichtung drehbar sind. Ein Drehen der Wirkflächen in Vorwärts-Fahrtrichtung gewährleistet einen noch besseren Windschutz. Dies ist dadurch bedingt, dass sich die Seitenteile näher an Seitenscheiben heranbewegen und Lücken zwischen den Seitenscheiben und dem Windschott schließen oder zumindest verkleinern.

Weitere Vorteile und vorteilhafte Ausgestaltungen der Erfindung ergeben sich aus der folgenden Beschreibung von bevorzugten Beispielen und Ausführungsbeispielen unter Bezugnahme auf die beigefügten Zeichnungen. Es zeigen:
- Fig. 1: eine schematische Darstellung eines ersten Ausführungsbeispiels eines erfindungsgemäßen, in einer Wirkstellung befindlichen, mehrteiligen Windschotts mit Lenkern, die die beiden Seitenteile mit dem Mittelteil koppeln,
- Fig. 2: eine schematische Darstellung des Windschotts nach Fig. 1, das sich in einer Zwischenstellung zwischen seiner Wirk- und einer Ruhestellung befindet,
- Fig. 3: eine schematische Darstellung des Windschotts nach Fig. 2 mit eingezeichneten Flächengebilden,
- Fig. 4: eine schematische Darstellung des Windschotts nach Fig. 1, das sich in seiner Ruhestellung befindet,
- Fig. 5: eine schematische Darstellung des Windschotts nach Fig. 4 mit eingezeichneten Flächengebilden,
- Fig. 6: eine schematische Darstellung eines zweiten Ausführungsbeispiels eines erfindungsgemäßen, in einer Wirkstellung befindlichen, mehrteiligen Windschotts mit einem Betätigungsmittel, das Zahnräder aufweist, die ein Seitenteil des Windschotts mit einem Mittelteil koppeln,
- Fig. 7: eine schematische Darstellung des Windschotts nach Fig. 6, das sich in einer Zwischenstellung zwischen seiner Wirk- und einer Ruhestellung befindet,
- Fig. 8: eine schematische Darstellung des Windschotts nach Fig. 6, das sich in seiner Ruhestellung befindet,
- Fig. 9: eine schematische Darstellung eines dritten Ausführungsbeispiels eines erfindungsgemäßen, in einer Wirkstellung befindlichen, mehrteiligen Windschotts mit einem Betätigungsmittel, das ein Seil aufweist, das über Umlenkrollen geführt ist und ein Seitenteil des Windschotts mit einem Mittelteil koppelt,
- Fig. 10: eine schematische Darstellung des Windschotts nach Fig. 9, das sich in einer Zwischenstellung zwischen seiner Wirk- und einer Ruhestellung befindet,
- Fig. 11: eine schematische Darstellung des Windschotts nach Fig. 9, das sich in seiner Ruhestellung befindet, und
- Fig. 12A - Fig. 12E: schematische Darstellungen eines vierten Ausführungsbeispiels eines erfindungsgemäßen Windschotts in verschiedenen Stellungen von der Ruhestellung bis zur Wirkstellung, wobei Wirkflächen der Seitenteile in eine Vorwärts-Fahrtrichtung gedreht werden.

Im Folgenden werden für gleiche oder gleichwirkende Elemente gleiche Bezugszeichen verwendet.

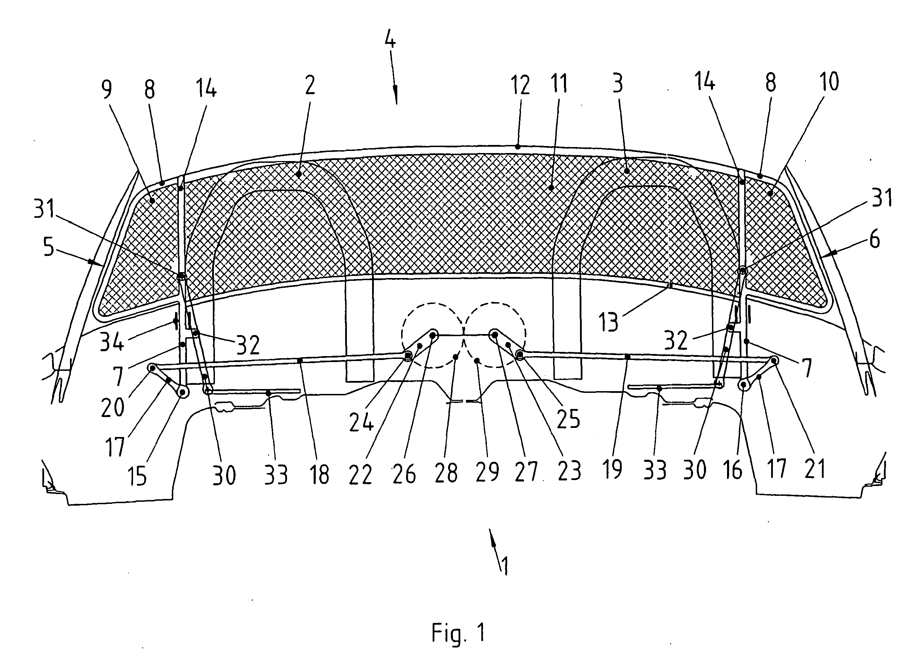

Fig. 1 zeigt eine schematische Darstellung eines ersten Ausführungsbeispiels eines erfindungsgemäßen Windschotts 1 für ein Cabriolet. Das Cabriolet ist hier ein zweisitziger, so genannter Roadster. Das Cabriolet weist zwei den Sitzen zugeordnete Überrollbügel 2 und 3 auf. Das Windschott 1 ist hier in Längsrichtung des Cabriolets hinter den Überrollbügeln 2, 3 angeordnet. Es ist aber ebenso möglich, das Windschott 1 in Längsrichtung des Cabriolets vor den Überrollbügeln 2, 3 anzuordnen. Das Windschott 1 erstreckt sich in Querrichtung des Cabriolets, so dass die Längsrichtung des Windschotts 1 senkrecht zu der Längsrichtung des Cabriolets verläuft. Das Windschott 1 befindet sich in der Fig. 1 in einer Wirkstellung, in der es als Windschutz für in einem Passagierraum des Cabriolets befindliche Passagiere dient. In seiner Wirkstellung ist das Windschott 1 aufgestellt, so dass es hinter den Überrollbügeln 2, 3 Wirkflächen zum Gewährleisten des Windschutzes aufspannt.

Das Windschott 1 ist ein mehrteiliges Windschott 1, das einen Mittelteil 4 und zwei Seitenteile 5 und 6 aufweist, die in der Wirkstellung des Windschotts 1, in seiner Längsrichtung betrachtet, zu beiden Seiten des Mittelteils 4 angeordnet sind. Die Seitenteile 5, 6 haben Rahmen, die als Rahmenelemente gerade Holme 7 und an den Holmen 7 angebrachte, in Längsrichtung des Windschotts 1 nach außen weisende, gebogene Außenbügel 8 aufweisen. Die Holme 7 verlaufen in der Wirkstellung des Windschotts 1 vertikal nach oben. Die Außenbügel 8 sind so gebogen und an den Holmen 7 angebracht, dass die Seitenteile 5 und 6 Wirkflächen 9 bzw. 10 haben, die in etwa dreieckförmig sind, wobei die Ecken der Wirkflächen 9, 10 allerdings gerundet sind. Die Wirkflächen 9, 10 werden durch Flächengebilde aufgespannt, die hier aus netzförmigen Stoffen gebildet und an den Rahmenelementen 7, 8 befestigt sind. Die Rahmen der Seitenteile 5, 6 sind somit fest mit den netzförmigen Stoffen bespannt. Es ist ebenso möglich, die Wirkflächen 9, 10 mit steifen Materialien, beispielsweise in Kunststoff oder in Glas, insbesondere Mineralglas, auszuführen.

Der Mittelteil 4 des Windschotts 1 weist ebenfalls einen Rahmen auf, in dem ein Flächengebilde aufgespannt ist. Der Rahmen des Mittelteils 4 und das aufgespannte Flächengebilde bilden eine Wirkfläche 11 des Mittelteils 4. Der Rahmen des Mittelteils 4 umfasst hier eine obere, längliche Rahmenleiste 12 und eine untere, längliche Rahmenleiste 13, die gegenüber der Rahmenleiste 12 nach unten versetzt angeordnet ist, so dass zwischen der oberen Rahmenleiste 12 und der unteren Rahmenleiste 13 in vertikaler Richtung ein bestimmter Abstand gegeben ist. Die Enden der oberen Rahmenleiste 12 und der unteren Rahmenleiste 13 können über zwei seitliche, vertikal verlaufende, längliche Rahmenelemente 14 zu beiden Seiten des Mittelteils 4 miteinander verbunden sein. Es ist auch möglich, die beiden Rahmenelemente 14 nicht bis an die Enden der unteren Rahmenleiste 13 verlaufen zu lassen. Der netzförmige Stoff kann dann an einem U-förmig ausgestalteten Rahmenelement, das mittels der oberen Rahmenleiste 12 und verkürzten Rahmenelementen 14 gebildet ist, und an der von diesem U-förmigen Rahmenelement beabstandeten unteren Rahmenleiste 13 befestigt sein. Zwischen dem U-förmigen Rahmenelement und der unteren Rahmenleiste 13 ist der netzförmige Stoff frei.

In der Wirkstellung des Windschotts 1 überspannt der netzförmige Stoff die durch die Beabstandung vorhandene Lücke zwischen dem U-förmigen Rahmenelement und der unteren Rahmenleiste 13. In einer abgesenkten Ruhestellung des Windschotts 1 wird der netzförmige Stoff in diesem Bereich zwischen dem U-förmigen Rahmenelement und der unteren Rahmenleiste 13 gefaltet. Die Wirkflächen 9-11 und die sie aufspannenden Flächengebilde sind durch netzförmige Schraffuren kenntlich gemacht.

Die Holme 7 der beiden Seitenteile 5, 6 sind an ihren unteren Enden schwenkbar und ortsfest an einer Karosserie des Cabriolets gelagert. Die Lagerung und Anordnung der Holme 7 ist dabei so ausgestaltet, dass sie ausgehend von ihren aufrechten Positionen in der Wirkstellung des Windschotts 1 in seiner Längsrichtung nach innen verschwenkbar sind. Schwenkachsen, um die die Holme 7 verschwenkbar sind, verlaufen somit in Längsrichtung des Cabriolets. Dadurch sind Drehpunkte 15 und 16 der Seitenteile 5 bzw. 6 ausgebildet. An den unteren Enden der Holme 7 der beiden Seitenteile 5, 6 sind an den Drehpunkten 15, 16 untere Enden von länglichen Kopplungsgliedern 17 angebracht, die in der Wirkstellung des Windschotts 1 schräg nach oben und in Längsrichtung des Windschotts 1 nach außen verlaufen. Zwischen den Holmen 7 und den Kopplungsgliedern 17 sind Winkel von in etwa 45° ausgebildet. An oberen Enden der Kopplungsglieder 17 sind äußere Enden von Gestängen 18 und 19 drehbar angeordnet. Das Gestänge 18 ist an dem Kopplungsglied 17 des Seitenteils 5 und das Gestänge 19 an dem Kopplungsglied 17 des Seitenteils 6 angeordnet. Dadurch sind Drehpunkte 20 und 21 der Gestänge 18 bzw. 19 ausgebildet. Die Gestänge 18, 19 verlaufen in Längsrichtung des Windschotts 1 von der Ankopplung in den Drehpunkten 20, 21 an die Kopplungsglieder 17 nach innen, insbesondere bis kurz vor die Mitte des Windschotts 1.

Die in Längsrichtung des Windschotts 1 inneren Enden der Gestänge 18, 19 sind drehbar an beweglichen Enden separater länglicher Antriebsglieder 22 und 23 befestigt. Dadurch sind Drehpunkte 24 und 25 gebildet, um die die Gestänge 18 bzw. 19 drehbar sind. Die Antriebsglieder 22, 23 sind an anderen ihrer Enden drehbar und ortsfest, insbesondere an der Karosserie des Cabriolets gelagert. Dadurch sind Drehpunkte 26 und 27 gebildet, um die die Antriebsglieder 22 bzw. 23 drehbar sind. Die Antriebsglieder 22, 23 sind antreibbar, so dass die Drehpunkte 24, 25 auf einem kreisförmigen oder teilkreisförmigen Weg verfahrbar sind. Die Antriebsglieder 22, 23 sind manuell antreibbar. Es ist aber ebenso möglich, sie mit einem automatischen Antrieb, wie z. B. einem Elektroantrieb oder einem hydraulischen Antrieb, anzutreiben. Die Antriebsglieder 22, 23 können unabhängig voneinander, insbesondere mit zwei Antrieben, angetrieben werden. Es ist aber vorteilhafterweise ebenso möglich, beide Antriebsglieder 22, 23 mit einem gemeinsamen Antrieb anzutreiben. Dazu sind die anderen Enden der Antriebsglieder 22 und 23 fest mit drehbar gelagerten, ineinander greifenden Zahnrädern 28 bzw. 29 verbunden. An einem dieser Zahnräder 28, 29 greift dann der Antrieb an. Dadurch können beide Zahnräder 28, 29 gedreht werden. Hier greift der Antrieb an dem Zahnrad 28 an.

Die Drehbewegungen der Zahnräder 28, 29 übertragen sich auf die Antriebsglieder 22, 23, so dass auf die an diese angeschlossenen Gestänge 18, 19 Kräfte ausgeübt werden. Diese Kräfte werden wiederum über die Drehpunkte 20 und 21 auf Kopplungsglieder 17 der beiden Seitenteile 5, 6 übertragen. Beim Verfahren des Windschotts 1 von der Wirkstellung nach Fig. 1 in die Ruhestellung wird das Zahnrad 28, und damit das an ihm befestigte Antriebsglied 22, entgegen der Richtung des Uhrzeigers angetrieben. Dadurch wird an dem Zahnrad 29, und damit an dem an ihm befestigten Antriebsglied 23, eine Drehung in Richtung des Uhrzeigers erzeugt. Durch das Drehen der Antriebsglieder 22, 23 werden Zugkräfte auf die Gestänge 18, 19 ausgeübt, so dass sich diese in der Längsrichtung des Windschotts 1 nach innen bewegen. An den Drehpunkten 20, 21 übertragen sich die Zugkräfte auf die Kopplungsglieder 17, und damit auf die mit diesen verbundenen Seitenteile 5, 6, so dass diese nach innen verschwenkt werden. Das Verschwenken der Seitenteile 5, 6 erfolgt in einer Ebene des Windschotts 1, die durch seine Längsrichtung und die Vertikale aufgespannt wird. Durch das Verschwenken der Seitenteile 5, 6 wird das Windschott 1 von seiner aufgestellten Wirkstellung in die abgesenkte Ruhestellung gebracht, indem es nach unten in Richtung einer Gürtellinie des Cabriolets verfahren wird. In der Ruhestellung spannt das Windschott 1 im Wesentlichen keine oder nur kleine Wirkflächen auf und gewährleistet keinen oder einen nur geringen Windschutz. Zwischen der Wirk- und der Ruhestellung kann das Windschott 1 Zwischenstellungen einnehmen. Die Antriebsglieder 22, 23, die Gestänge 18, 19 und die Kopplungsglieder 17 sind hier als Teile zweier Betätigungsmittel anzusehen, mit denen das Windschott 1 betätigbar ist, um es ausgehend von der Ruhestellung in die Wirkstellung aufzustellen, um es ausgehend von der Wirkstellung in die Ruhestellung abzusenken und um es in eine beliebige Zwischenstellung zwischen der Ruhe- und der Wirkstellung zu bringen. Vorteilhafterweise ist das Windschott 1, und insbesondere sein Antrieb, so ausgestaltet, dass es nur in die Ruhe- und die Wirkstellung verfahren werden kann. Die Zwischenstellungen sind daher nur Übergangsstellungen und nicht als feste Stellungen einstellbar.

Das Windschott 1 gemäß dem ersten Ausführungsbeispiel weist eine Kopplung zwischen den beiden Seitenteilen 5, 6 und dem Mittelteil 4 auf, die hier mit länglichen Lenkern 30 zu beiden Seiten des Windschotts 1 realisiert sind. Die Lenker 30 sind an einem ihrer Enden drehbar an den Rahmenelementen 14 befestigt. Dadurch sind Drehpunkte 31 gebildet. In etwa in ihrer jeweiligen Mitte sind die Lenker 30 in den unteren Dritteln der Holme 7 drehbar an diesen befestigt. Dadurch sind Drehpunkte 32 gebildet. An ihren anderen Enden sind die Lenker 30 zudem in karosseriefesten, horizontal verlaufenden, insbesondere schlitzförmigen Kulissen 33 verschiebbar gelagert. Dadurch wird beim Verfahren des Windschotts 1 erreicht, dass sich der Mittelteil 4 auf einer vertikalen Geraden bewegt. In der Wirkstellung des Windschotts 1 befinden sich die Enden der Lenker 30 an den in Längsrichtung des Windschotts 1 äußeren Enden der Kulissen 33. Die beiden Rahmenelemente 14 können zudem in Führungen 34 geführt sein, die ein Verfahren des Mittelteils 4 in vertikaler Richtung erlauben. Die Anordnungen der Lenker 30 sind im vorliegenden Ausführungsbeispiel vorteilhafterweise in einem unteren Bereich des Windschotts 1 realisiert, so dass sie von außen nicht sichtbar sind. Die Lenker 30 dienen dazu, die Verschwenkbewegungen der Seitenteile 5, 6 auf die Rahmenelemente 14, und damit auf den Mittelteil 4 zu übertragen.

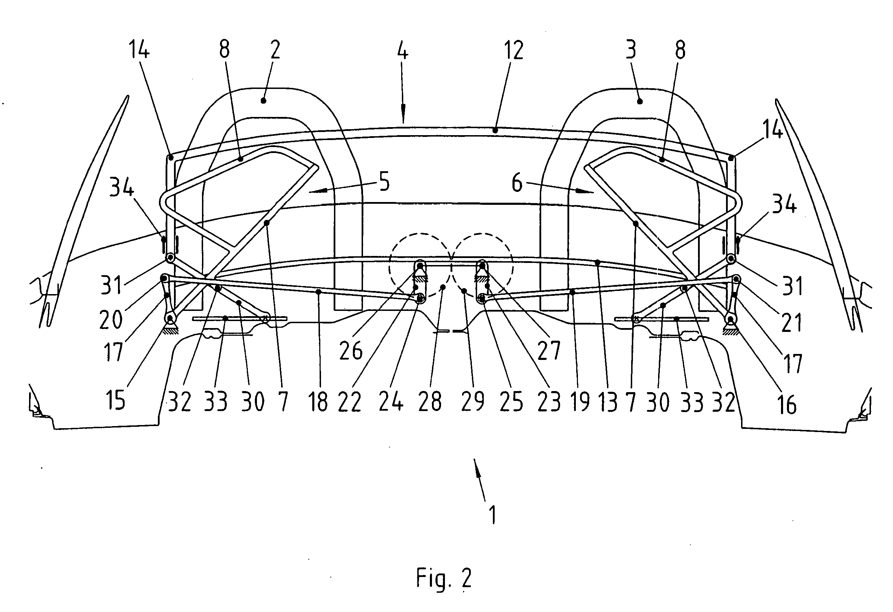

Fig. 2 zeigt eine schematische Darstellung des Windschotts 1 nach Fig. 1 in einer Zwischenstellung zwischen seiner Wirk- und Ruhestellung. Die die Wirkflächen 9-11 und die Flächengebilde der Seitenteile 5, 6 und des Mittelteils 4 kenntlich machenden Schraffuren sind in der Fig. 2 aus Übersichtlichkeitsgründen weggelassen. Die Antriebsglieder 22 und 23 wurden um ca. 45° gegen den bzw. im Uhrzeigersinn gedreht und verlaufen hier nahezu vertikal. Die Drehungen der Antriebsglieder 22, 23 haben sich über die Gestänge 18, 19 und die Kopplungsglieder 17 auf die Seitenteile 5, 6 übertragen. Die beiden Seitenteile 5, 6 sind nach innen verschwenkt. Die Rotationsbewegungen der Seitenteile 5, 6 werden über die Lenker 30 auf die Rahmenelemente 14, und damit auf den Mittelteil 4 übertragen. Dieses wird aufgrund der Führung der Lenker 30 in den Kulissen 33 und ggf. der Führungen 34 mit einer Translationsbewegung senkrecht nach unten abgesenkt.

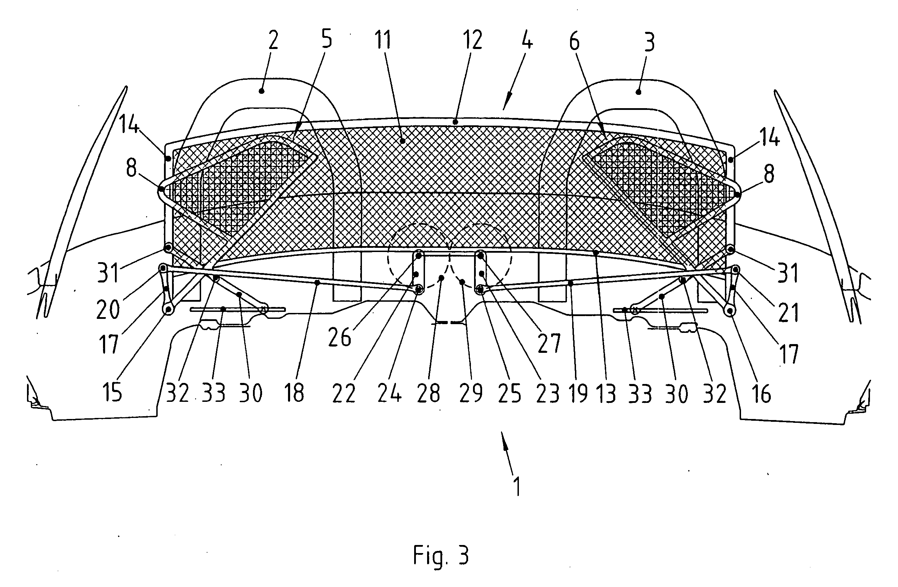

Fig. 3 zeigt eine schematische Darstellung des Windschotts 1 in der Zwischenstellung nach Fig. 2. In der Fig. 3 sind die Schraffuren der Flächengebilde der Seitenteile 5, 6 und des Mittelteils 4 eingezeichnet.

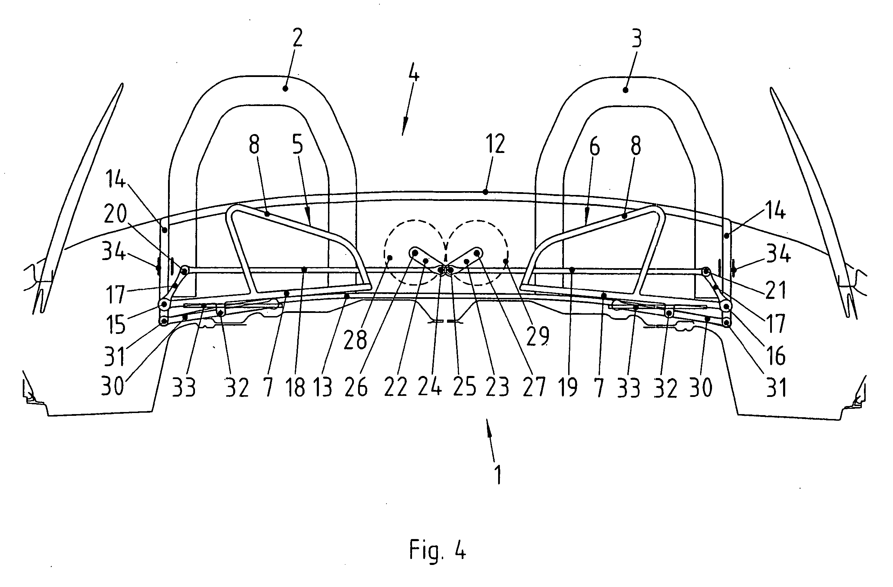

Fig. 4 zeigt eine schematische Darstellung des Windschotts 1 gemäß dem ersten Ausführungsbeispiel, das sich hier in seiner Ruhestellung befindet. Die die Wirkflächen 9-11 und die Flächengebilde der Seitenteile 5, 6 und des Mittelteils 4 kenntlich machenden Schraffuren sind in der Fig. 4 aus Übersichtlichkeitsgründen erneut weggelassen. Die Antriebsglieder 22, 23 wurden weiter gedreht und bilden zu der Vertikalen einen Winkel von ca. 45°. Gegenüber der Wirkstellung wurden die Antriebsglieder 22 und 23 um ca. 90° gegen den bzw. im Uhrzeigersinn gedreht, um das Windschott 1 in die Ruhestellung zu bringen. Die Seitenteile 5, 6 sind nun vollständig nach unten verschwenkt. Der Mittelteil 4 wurde mit der Bewegung der Seitenteile 5, 6 senkrecht nach unten gefahren.

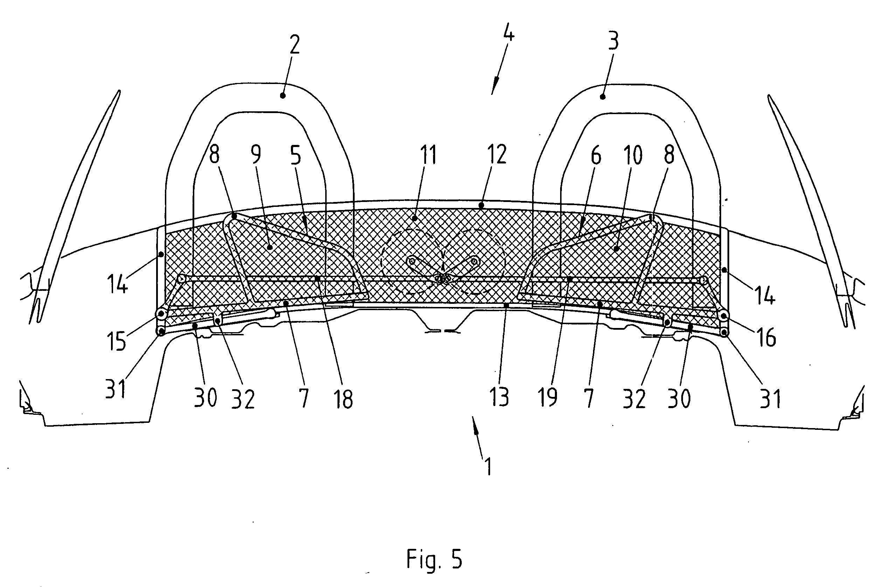

Fig. 5 zeigt eine schematische Darstellung des Windschotts 1 in der Ruhestellung nach Fig. 4. In der Fig. 5 sind die Schraffuren der Flächengebilde der Seitenteile 5, 6 und des Mittelteils 4 wieder eingezeichnet.

In dem anhand der Fig. 1-5 beschriebenen ersten Ausführungsbeispiel wurde eine Bewegung zum Absenken des Windschotts 1 aus seiner Wirkstellung nach Fig. 1 in seine Ruhestellung nach Fig. 4 und 5 beschrieben. Es ist mittels eines umgekehrten Antreibens der Antriebsglieder 22 und 23 in bzw. entgegen der Richtung des Uhrzeigersinns möglich, das Windschott 1 aus seiner Ruhestellung in seine Wirkstellung aufzustellen.

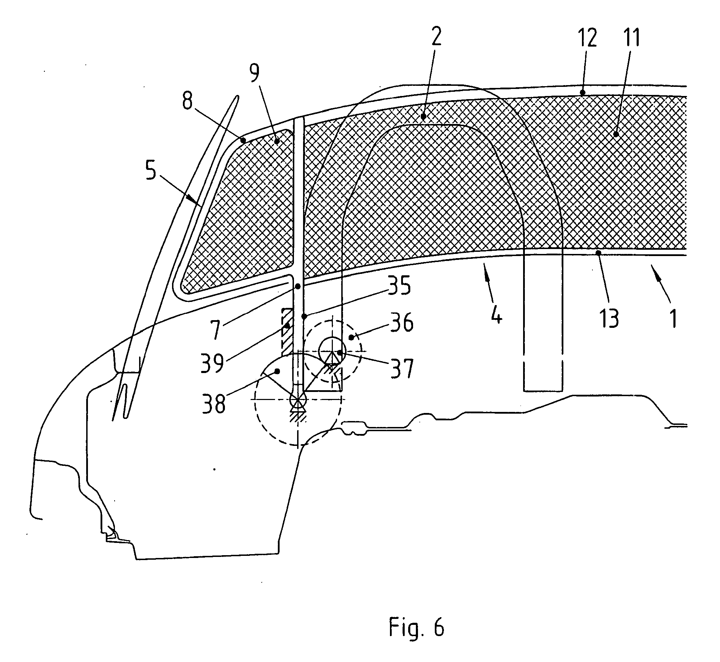

Fig. 6 zeigt eine schematische Darstellung eines zweiten Ausführungsbeispiels des erfindungsgemäßen, in seiner Wirkstellung befindlichen, mehrteiligen Windschotts 1. Das Windschott 1 ist in seiner Längsrichtung symmetrisch aufgebaut. In der Fig. 6 ist nur die linke Hälfte des Windschotts 1 dargestellt. Die rechte Hälfte des Windschotts 1 ergibt sich analog. Das Windschott 1 gemäß dem zweiten Ausführungsbeispiel unterscheidet sich insbesondere in der Ausgestaltung des Betätigungsmittels zum Verfahren des Windschotts 1 von dem Windschott 1 gemäß dem ersten Ausführungsbeispiel. Ferner ist die Kopplung zwischen den Seitenteilen 5, 6 und dem Mittelteil 4 anders aufgebaut. Der Mittelteil 4 weist den Rahmen auf, der aus der oberen Rahmenleiste 12, der unteren Rahmenleiste 13 und den beiden seitlichen Rahmenelementen 14 gebildet ist. Das jeweilige seitliche Rahmenelement 14 ragt hier in vertikaler Richtung ausgehend von der Verbindung zu der oberen Rahmenleiste 12 über die Verbindung zu der unteren Rahmenleiste 13 hinaus weiter nach unten, so dass es einen unteren Fortsatz aufweist, an dem kein Flächengebilde befestigt ist. Die nach innen weisende Seite des Rahmenelements 14 ist mit einer Zahnradstange 35 versehen, in die ein Zahnrad 36 eingreift. Das Zahnrad 36 ist in Längsrichtung des Windschotts 1 nach innen seitlich zum Rahmenelement 14 versetzt platziert. Das Zahnrad 36 ist auf einer Achse zusammen mit einem Zahnrad 37 angeordnet. Die gemeinsame Achse der Zahnräder 36 und 37 ist drehbar und ortsfest gelagert. In das Zahnrad 37 greift ein weiteres Zahnrad 38 ein, das am unteren Ende des Holms 7 des Seitenteils 5 in dem Drehpunkt 15 angeordnet ist. Das Zahnrad 38 ist fest mit dem Holm 7 verbunden. Es ist ausreichend, dass Zahnrad 38 als ein viertelkreisförmiges Zahnrad 38 auszugestalten, so dass es einen Winkel von annähernd 90° überstreicht. Dies ist deshalb ausreichend, da im vorliegenden Ausführungsbeispiel zum Verfahren des Windschotts 1 zwischen seiner Wirk- und seiner Ruhestellung ein Verschwenken der Seitenteile 5, 6 um annähernd 90° durchgeführt wird. Die Anordnungen und Ausgestaltungen der Zahnräder 36-38 und der Zahnradstange 35 bilden ein Betätigungsmittel zum Verschwenken des Seitenteils 5 und zum Verfahren des Mittelteils 4, so dass mit diesem Betätigungsmittel das Windschott 1 in seine Wirkstellung aufgestellt und in seine Ruhestellung abgesenkt werden kann. Gleichzeitig dienen die Zahnräder 36-38 und die Zahnradstange 35 als Kopplungsmittel zum Koppeln des Seitenteils 5 mit dem Mittelteil 4. Dadurch lässt sich beim Verfahren des Windschotts 1 eine Rotationsbewegung des Seitenteils 5 in eine Translationsbewegung des Mittelteils 4 übertragen, oder umgekehrt. Es ist möglich, entweder das Zahnrad 37 oder das Zahnrad 38 anzutreiben. Dies kann manuell oder mit einem Antrieb erfolgen. Es ist auch möglich, die Zahnräder 37, 38 mittels Gestänge nach Art des ersten Ausführungsbeispiels zu koppeln und in der Mitte anzutreiben.

Im vorliegenden Ausführungsbeispiel wird das Zahnrad 38 zum Absenken des Windschotts 1 von seiner Wirk- in seine Ruhestellung im Uhrzeigersinn angetrieben. Der Seitenteil 5 wird daher mit einer Rotationsbewegung nach unten verschwenkt. Die Drehbewegung des Zahnrads 38 überträgt sich auf das Zahnrad 37 und ebenfalls auf das Zahnrad 36, da dieses auf der gleichen Achse angeordnet ist, wie das Zahnrad 37. Die Zahnräder 36 und 37 drehen sich in eine Richtung entgegen dem Uhrzeigersinn. Durch das Eingreifen des Zahnrads 36 in die Zahnstange 35 führt das Drehen des Zahnrads 36 zu einem Verfahren des Mittelteils 4 vertikal nach unten. Um dieses vertikale Verfahren des Mittelteils 4 sicherzustellen, ist das Rahmenelement 14 mit einer Führung 39 in vertikaler Richtung geführt. Die Führung 39 lässt nur eine vertikale Bewegung des Rahmenelements 14 zu.

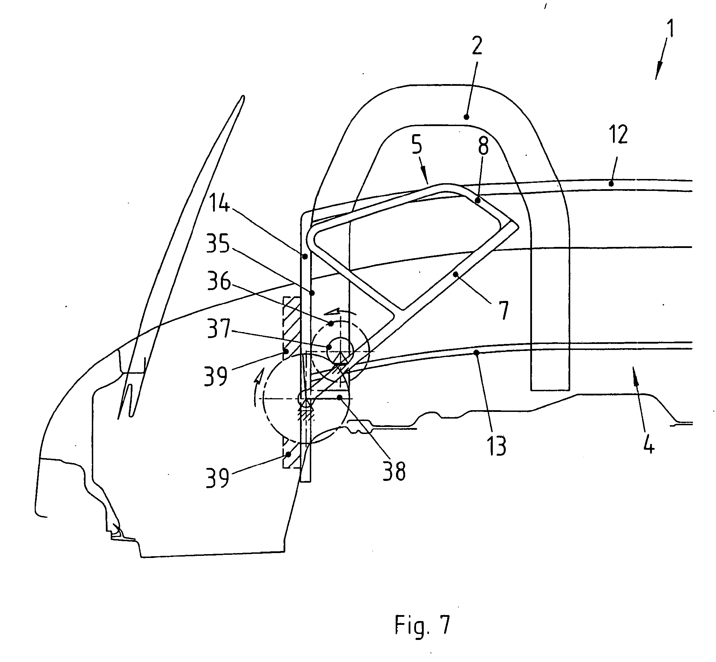

Fig. 7 zeigt eine schematische Darstellung des Windschotts 1 gemäß dem zweiten Ausführungsbeispiel nach Fig. 6, das sich in einer Zwischenstellung zwischen seiner Wirk- und einer Ruhestellung befindet. Der Seitenteil 5 ist nach innen geschwenkt und der Mittelteil 4 vertikal nach unten gefahren.

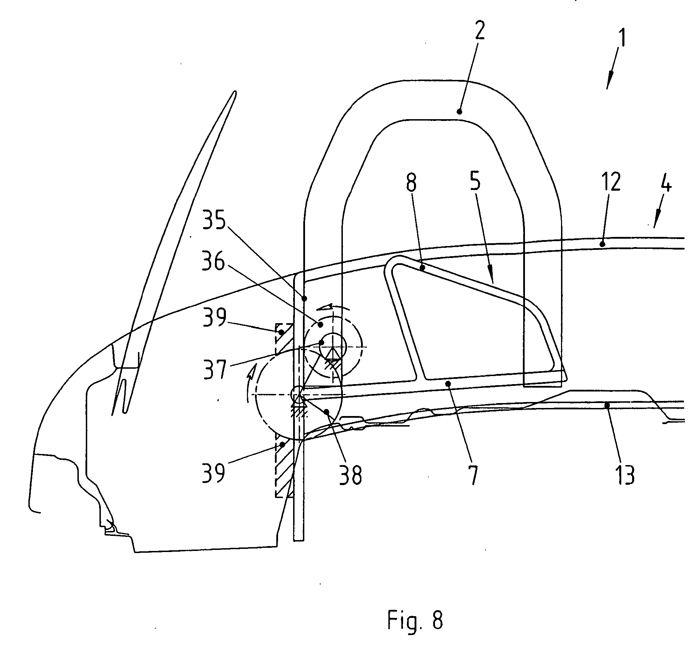

Fig. 8 zeigt eine schematische Darstellung des Windschotts 1 gemäß dem zweiten Ausführungsbeispiel, das sich in seiner Ruhestellung befindet. Die Zahnräder 36-38 und der Seitenteil 5 sind um annähernd 90° gegenüber der Wirkstellung des Windschotts 1 gedreht. Der Seitenteil 5 ist nun vollständig nach innen geschwenkt, so dass sein Holm 7 nahezu horizontal verläuft. Der Mittelteil 4 ist vertikal nach unten gefahren.

In den Fig. 7 und 8 sind die die Wirkflächen 9, 11 und die Flächengebilde des Seitenteils 5 und des Mittelteils 4 kenntlich machenden Schraffuren aus Übersichtlichkeitsgründen weggelassen. Des Weiteren wurde eine Bewegung zum Absenken des Windschotts 1 aus seiner Wirkstellung nach Fig. 5 in seine Ruhestellung nach Fig. 8 beschrieben. Es ist mittels eines umgekehrten Antreibens des Zahnrads 38 entgegen der Richtung des Uhrzeigersinns möglich, das Windschott 1 aus seiner Ruhestellung in seine Wirkstellung aufzustellen.

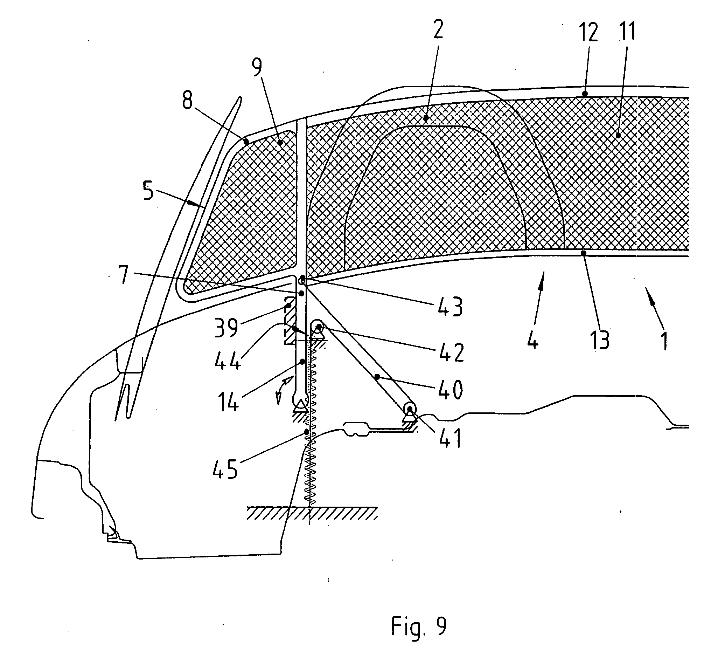

Fig. 9 zeigt eine schematische Darstellung eines dritten Ausführungsbeispiels des erfindungsgemäßen, in seiner Wirkstellung befindlichen, mehrteiligen Windschotts 1. Das Windschott 1 ist auch hier in seiner Längsrichtung symmetrisch aufgebaut. Es ist nur die linke Hälfte des Windschotts 1 dargestellt. Die rechte Hälfte des Windschotts 1 ergibt sich analog. Das Windschott 1 gemäß dem dritten Ausführungsbeispiel unterscheidet sich insbesondere in der Ausgestaltung des Betätigungsmittels zum Verfahren des Windschotts 1 und der Kopplung zwischen dem Seitenteil 5 und dem Mittelteil 4 von dem Windschott 1 gemäß dem zweiten Ausführungsbeispiel. Das Windschott 1 enthält hier als Betätigungs- und Kopplungsmittel ein Seil 40, das über zwei Umlenkrollen 41, 42 geführt ist. Die Umlenkrolle 41 ist unterhalb der unteren Rahmenleiste 13 in Höhe der Gürtellinie des Cabriolets karosseriefest befestigt. Die andere Umlenkrolle 42 ist ortsfest, in Längsrichtung des Windschotts 1 innen und seitlich versetzt dem Rahmenelement 14 benachbart angeordnet. Ein Ende des Seils 40 ist in einem Verbindungspunkt 43 an dem Holm 7 des Seitenteils 5 und ein anderes Ende des Seils 40 in einem Verbindungspunkt 44 an dem unteren Ende des Rahmenelements 14 befestigt. Das untere Ende des Rahmenelements 14 ist ferner mit einer Rückstellfeder 45 gekoppelt, die in der vertikalen Verlängerung des Rahmenelements 14 vertikal nach unten an der Karosserie des Cabriolets angebracht ist. Die Rückstellfeder 45 übt eine ständige Kraft in vertikaler Richtung nach unten auf das Rahmenelement 14 aus. An Stelle der Rückstellfeder 45 kann auch ein anderes Kraftelement eingesetzt werden, das eine solche Kraft auf das Rahmenelement 14 ausübt. Das Rahmenelement 14 ist, wie im zweiten Ausführungsbeispiel, mittels der Führung 39 in vertikaler Richtung geführt. Das Seil 40 ist hier vorteilhafterweise ein Drahtseil, das besonders stabil ist und große Kräfte aufnehmen und übertragen kann.

Im vorliegenden dritten Ausführungsbeispiel wird der Holm 7 des Seitenteils 5 in dem Drehpunkt 15 angetrieben, um das Windschott 1 von der Wirkstellung gemäß Fig. 9 in seine Ruhestellung zu verfahren. Dazu wird der Holm 7 in Richtung des Uhrzeigers gedreht. Der Seitenteil 5 wird dabei nach innen verschwenkt und der Verbindungspunkt 43 fährt bogenförmig nach unten. Dadurch wird es der Rückstellfeder 45 ermöglicht, sich zusammenzuziehen. Dies bewirkt das Verfahren des Rahmenelements 14, und damit des gesamten Mittelteils 4 vertikal nach unten.

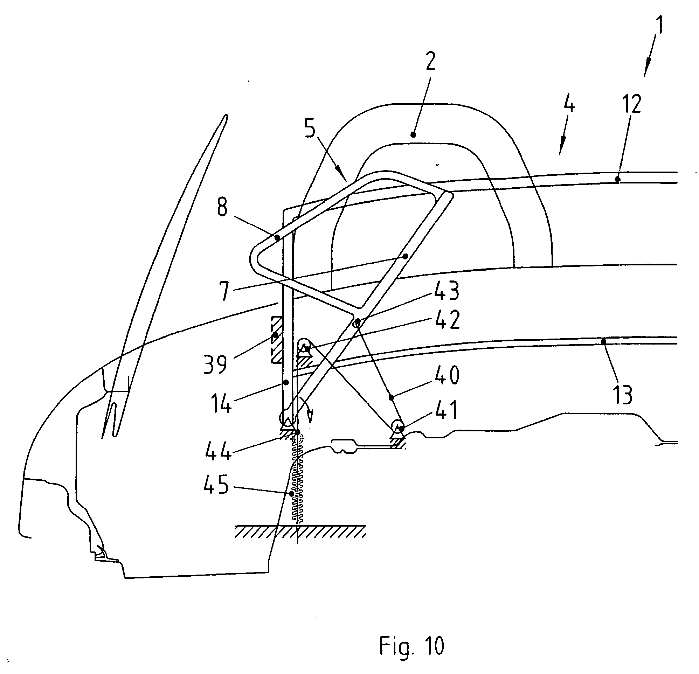

Fig. 10 zeigt eine schematische Darstellung des Windschotts 1 gemäß dem dritten Ausführungsbeispiel nach Fig. 9, das sich in einer Zwischenstellung zwischen seiner Wirk- und einer Ruhestellung befindet. Der Seitenteil 5 ist nach innen geschwenkt und die Rückstellfeder 45 hat sich zusammengezogen. Dadurch ist der Mittelteil 4 vertikal nach unten gefahren.

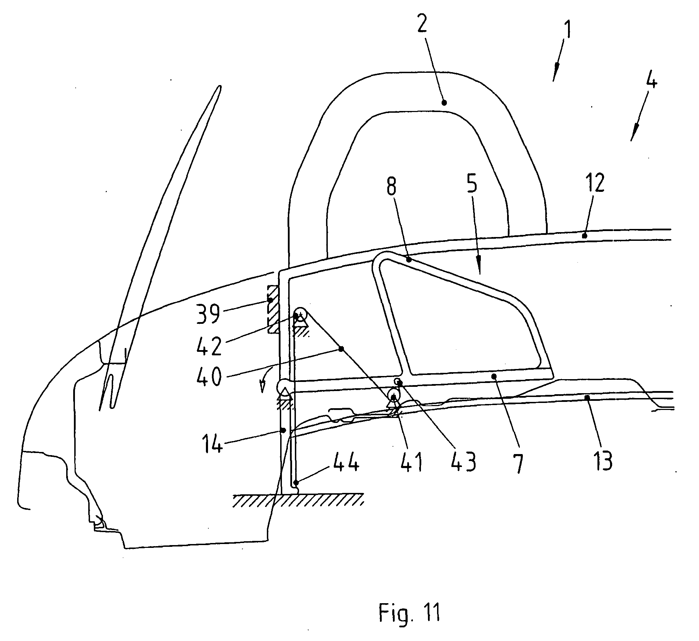

Fig. 11 zeigt eine schematische Darstellung des Windschotts 1 gemäß dem dritten Ausführungsbeispiel, das sich in seiner Ruhestellung befindet. Der Seitenteil 5 ist nun vollständig nach innen geschwenkt, so dass sein Holm 7 nahezu horizontal verläuft. Der Mittelteil 4 ist vertikal nach unten gefahren. Die Rückstellfeder 45 ist vollständig zusammengefahren.

In den Fig. 10 und 11 sind die die Wirkflächen 9, 11 und die Flächengebilde des Seitenteils 5 und des Mittelteils 4 kenntlich machenden Schraffuren aus Übersichtlichkeitsgründen weggelassen. Des Weiteren wurde eine Bewegung zum Absenken des Windschotts 1 aus seiner Wirkstellung nach Fig. 9 in seine Ruhestellung nach Fig. 11 beschrieben. Es ist mittels eines umgekehrten Antreibens des Holms 7 des Seitenteils 5 entgegen der Richtung des Uhrzeigersinns möglich, das Windschott 1 aus seiner Ruhestellung in seine Wirkstellung aufzustellen.

In dem zweiten und dem dritten Ausführungsbeispiel sind das Betätigungsmittel zum Verfahren des Windschotts 1 und das Kopplungsmittel zum Koppeln der Seitenteile 5, 6 mit dem Mittelteil 4 vorteilhafterweise mit den gleichen Komponenten ausgeführt. Diese Komponenten führen daher zwei Funktionen aus, was besonders kostengünstig ist und ein leichtes und kompaktes Windschott ermöglicht.

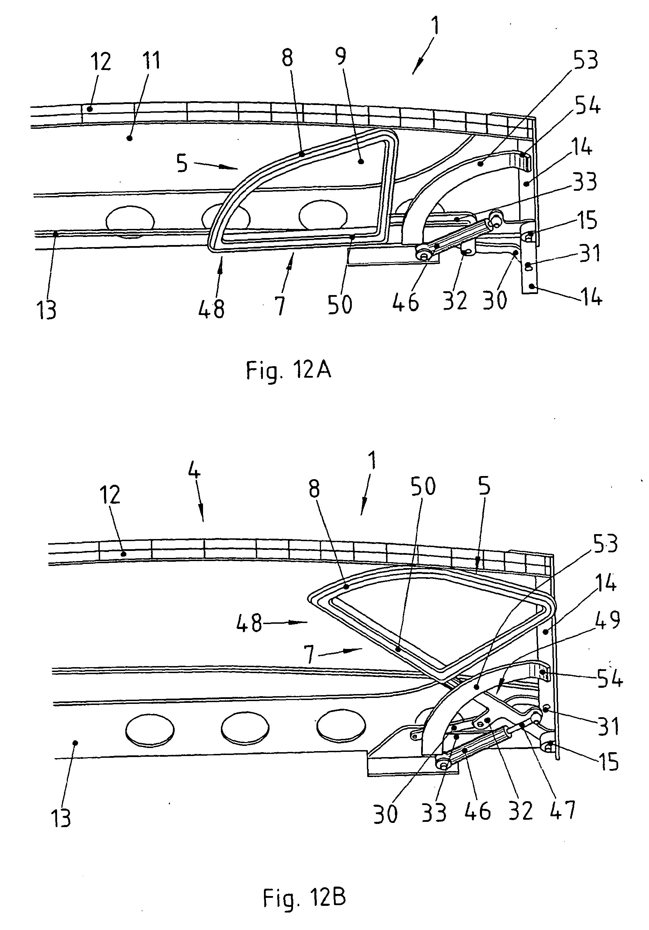

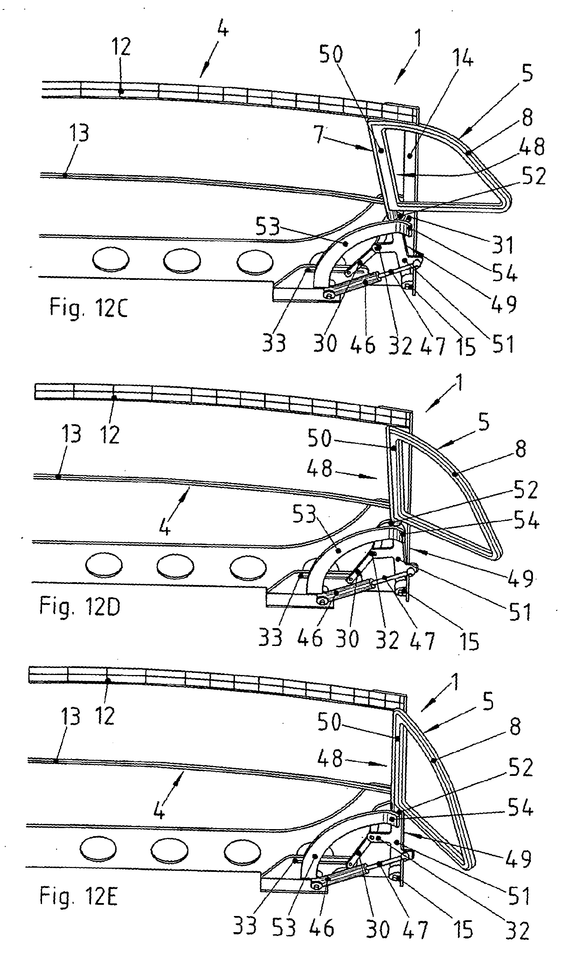

Fig. 12A - Fig. 12E zeigen schematische Darstellungen eines vierten Ausführungsbeispiels des erfindungsgemäßen Windschotts 1 in verschiedenen Stellungen von der Ruhestellung bis zur Wirkstellung. Dabei werden die Wirkflächen 9, 10 der Seitenteile 5, 6 im Verlauf des Verschwenkens der Seitenteile 5, 6 beim Verfahren des Windschotts 1 von seiner Ruhestellung in seine Wirkstellung in Richtung einer Vorwärts-Fahrtrichtung des Cabriolets gedreht. Das Windschott 1 ist auch hier in seiner Längsrichtung symmetrisch aufgebaut. Es ist nur die linke Hälfte des Windschotts 1 dargestellt. Die rechte Hälfte des Windschotts 1 ergibt sich analog. Im Gegensatz zu den vorhergehenden Ausführungsbeispielen, in denen das Windschott 1 in einer Ansicht von hinten gezeigt ist, ist das Windschott 1 hier aus einer Ansicht von vorne dargestellt. Der Aufbau des Windschotts 1 gemäß dem vorliegenden vierten Ausführungsbeispiel stimmt weitgehend mit demjenigen des Windschotts 1 gemäß dem ersten Ausführungsbeispiel überein. Insbesondere ist hier der Holm 7 des Seitenteils 5 über den Lenker 30 mit dem Rahmenelement 14 des Mittelteils 4 gekoppelt. Der Lenker 30 ist in der Kulisse 33 geführt. An Stelle des geradlinigen Lenkers 30 weist der Lenker 30 hier kurz vor seiner Anbindung an das Rahmenelement 14 eine Biegung auf. Das Betätigungsmittel zum Verschwenken des Seitenteils 5 weist hier einen hydraulischen Mechanismus mit einem Zylinder 46 und einem in dem Zylinder 46 beweglichen Kolben 47 auf. Der Zylinder 46 ist karosseriefest gelagert und der Kolben 47 an dem Holm 7 des Seitenteils 5 befestigt. In der Ruhestellung des Windschotts 1 ist der Kolben 47 in den Zylinder eingefahren, während er zum Aufstellen des Windschotts 1 aus dem Zylinder 46 herausgefahren wird. Durch dieses Herausfahren des Kolbens 47 wird der Seitenteil 5 nach oben verschwenkt.

Der Seitenteil 5 ist hier in einen oberen Teil 48 und einen unteren Teil 49 unterteilt. Der obere Teil 48 umfasst einen oberen Teil 50 des Holms 7 und den Außenbügel 8 für das Aufspannen des Flächengebildes für die Wirkfläche 9. Der untere Teil 49 umfasst einen unteren Teil 51 des Holms 7 mit den Verbindungsstellen für den Lenker 30 und den Kolben 47. Zum Verdrehen der Wirkfläche 9 des Seitenteils 5 in Richtung der Vorwärts-Fahrtrichtung ist der obere Teil 50 des Holms 7 an dem unteren Teil 51 des Holms 7 drehbar gelagert. Auf den oberen Teil 48 des Seitenteils 5 wirkt eine Federkraft, die den oberen Teil 48 nach vorne in Richtung der Vorwärts-Fahrtrichtung drückt oder dreht. Eine Feder greift dazu in geeigneter Weise an dem Seitenteil 5 an. Im unteren Bereich des oberen Teils 50 des Holms 7 ist eine Nocke oder ein Fortsatz 52 angebracht, der zum Führen des Holms 7 beim Verschwenken des Seitenteils 5 dient. Zum Führen des Fortsatzes 52 ist ferner ein viertelkreisförmiges Führungselement 53 vorgesehen, gegen das der Fortsatz 52 aufgrund der auf den oberen Teil 48 wirkenden Federkraft drückt. Das Führungselement 53 weist an einem oberen, äußeren Ende einen Endbereich 54 auf, der nach vorne in Richtung der Vorwärts-Fahrtrichtung gebogen ist. Kommt der Fortsatz 52 beim Verschwenken des Seitenteils 5 nach oben in den Endbereich 54, dann folgt er aufgrund der Federkraft dem Verlauf des Endbereichs 54, so dass sich der obere Teil 48 nach vorne in Richtung der Vorwärts-Fahrtrichtung dreht. Dieser Bewegungsablauf ist ausgehend von der Ruhestellung des Windschotts 1, in der die Wirkfläche 9 des Seitenteils 5 parallel zu der Wirkfläche 11 des Mittelteils 4 liegt und die in der Fig. 12A dargestellt ist, bis zu der Wirkstellung des Windschotts 1, in der die Wirkfläche 9 in Richtung der Vorwärts-Fahrtrichtung verdreht ist und die in der Fig. 12E zu sehen ist, dargestellt. Die Fig. 12B - 12D zeigen insofern Zwischenstellungen des Seitenteils zwischen der Ruhe- und der Wirkstellung.

Es ist bei dem erfindungsgemäßen Windschott 1 und dem erfindungsgemäßen Cabriolet möglich, die Betätigung des Windschotts 1 mit einem Antrieb eines Verdecks des Cabriolets zu koppeln. Dadurch kann gewährleistet werden, dass das Verdeck ordnungsgemäß öffnen und schließen kann und das Windschott 1 dabei den Weg für ein Verdeckgestänge und/oder einen Dachrahmen freigegeben hat. Beispielsweise kann das in seine Wirkstellung aufgestellte Windschott 1 automatisch in seine Ruhestellung abgesenkt werden, wenn ein geöffnetes Verdeck geschlossen werden soll.

## Patentansprüche

1. Windschott (1) für ein Cabriolet, wobei das Windschott (1) ein mehrteiliges Windschott (1) mit einem Mittelteil (4) und zwei jeweils einen Rahmen aufweisenden Seitenteilen (5, 6) ist, wobei die Seitenteile (5, 6) an ihrem unteren Ende schwenkbar und ortsfest an einer Karosserie des Cabriolets gelagert sind, welches Windschott (1) so ausgestaltet ist, dass es zum Gewährleisten eines Windschutzes in eine Wirkstellung aufstellbar und ausgehend von seiner Wirkstellung in eine Ruhestellung absenkbar ist, wobei der Mittelteil (4) einerseits und die zwei Seitenteile (5, 6) andererseits so ausgestaltet und angeordnet sind, dass sie zum Aufstellen des Windschotts (1) in seine Wirkstellung und zum Absenken des Windschotts (1) in seine Ruhestellung mit unterschiedlichen Bewegungsabläufen verfahrbar sind, **dadurch gekennzeichnet, dass** auch der Mittelteil (4) einen Rahmen aufweist, in dem ein Flächengebilde aufgespannt ist und dass der Mittelteil (4) so ausgestaltet und angeordnet ist, dass zum Aufstellen des Windschotts (1) in seine Wirkstellung und zum Absenken des Windschotts (1) in seine Ruhestellung eine Translationsbewegung ausführbar ist.

2. Windschott nach Anspruch 1, **dadurch gekennzeichnet, dass** die zwei Seitenteile (5, 6) schwenkbar gelagert sind, so dass zum Aufstellen des Windschotts (1) in seine Wirkstellung und zum Absenken des Windschotts (1) in seine Ruhestellung Rotationsbewegungen ausführbar sind.

3. Windschott nach Anspruch 2, **dadurch gekennzeichnet, dass** die zwei Seitenteile (5, 6) so ausgestaltet und gelagert sind, dass die Rotationsbewegung des einen Seitenteils (5) in eine Richtung ausführbar ist, die einer Richtung der Rotationsbewegung des anderen Seitenteils (6) entgegengesetzt ist.

4. Windschott nach einem der vorhergehenden Ansprüche, **dadurch gekennzeichnet, dass** der Mittelteil (4) mittels Kopplungsmitteln mit den Seitenteilen (5, 6) gekoppelt ist.

5. Windschott nach einem der vorhergehenden Ansprüche, **dadurch gekennzeichnet, dass** zwei Betätigungsmittel (17,18,19, 22, 23; 36-38; 40-42) zum Betätigen des Windschotts (1) vorhanden sind, um dieses in seine Wirkstellung aufzustellen und in seine Ruhestellung abzusenken, wobei das eine Betätigungsmittel (17, 18, 22; 36-38; 40-42) dem einen Seitenteil und das andere Betätigungsmittel (17, 19, 23; 36-38; 40-42) dem anderen Seitenteil zugeordnet ist.

6. Windschott nach Anspruch 5, **dadurch gekennzeichnet, dass** die Betätigungsmittel (17, 18, 19, 22, 23; 36-38; 40-42) an den Seitenteilen (5, 6) angreifen.

7. Windschott nach Anspruch 5 oder 6, **dadurch gekennzeichnet, dass** die Betätigungsmittel (17, 18, 19, 22, 23) jeweils ein Gestänge (18, 19) aufweisen.

8. Windschott nach einem der Ansprüche 5-7, **dadurch gekennzeichnet, dass** die Betätigungsmittel (17, 18, 19, 22, 23; 36-38; 40-42) mit wenigstens einem Antrieb verbunden sind.

9. Windschott nach Anspruch 4 und einem der Ansprüche 5-8, **dadurch gekennzeichnet, dass** die Betätigungsmittel (36-38; 40-42) zusätzlich als Kopplungsmittel ausgestaltet sind.

10. Windschott nach Anspruch 9, **dadurch gekennzeichnet, dass** die Betätigungsmittel (17, 18, 19, 22, 23; 36-38) jeweils mehrere Zahnräder (18, 19; 36-38) aufweisen, die ineinander greifen und zum Bewegen eines der Seitenteile (5, 6) und des Mittelteils (4) dienen.

11. Windschott nach Anspruch 9, **dadurch gekennzeichnet, dass** die Betätigungsmittel (40-42) jeweils ein Seil aufweisen, das über Umlenkrollen (41, 42) geführt ist, und zum Bewegen eines der Seitenteile (5, 6) und des Mittelteils (4) dient.

12. Windschott nach einem der vorhergehenden Ansprüche, **dadurch gekennzeichnet, dass** die Seitenteile (5, 6) Wirkflächen (9, 10) aufweisen, die zum Gewährleisten des Windschutzes dienen, und die Seitenteile (5, 6) so ausgestaltet sind, dass ihre Wirkflächen (9, 10) in Richtung einer Vorwärts-Fahrtrichtung drehbar sind.

13. Cabriolet mit einem Windschott (1) nach einem der vorhergehenden Ansprüche.

## Claims

1. Wind deflector (1) for a convertible, the wind deflector (1) being a multi-part wind deflector (1) with a middle part (4) and with two side parts (5, 6) each having a frame, the side parts (5, 6) being mounted at their lower end pivotably and at a fixed location on a body of the convertible, which wind deflector (1) is configured such that it can be erected into an operative position to ensure wind protection and can be lowered from its operative position into a position of rest, the middle part (4), on the one hand, and the two side parts (5, 6), on the other hand, being configured and arranged such that they can be moved with different movement sequences in order to erect the wind deflector (1) into its operative position and in order to lower the wind deflector (1) into its position of rest, **characterized in that** the middle part (4) also has a frame in which a sheet-like structure is tension-mounted, and **in that** the middle part (4) is configured and arranged such that a translational movement can be executed in order to erect the wind deflector (1) into its operative position and in order to lower the wind deflector (1) into its position of rest.

2. Wind deflector according to Claim 1, **characterized in that** the two side parts (5, 6) are mounted pivotably, so that rotational movements can be executed in order to erect the wind deflector (1) into its operative position and in order to lower the wind deflector (1) into its position of rest.

3. Wind deflector according to Claim 2, **characterized in that** the two side parts (5, 6) are configured and mounted such that the rotational movement of one side part (5) can be executed in a direction which is opposite to a direction of the rotational movement of the other side part (6).

4. Wind deflector according to one of the preceding claims, **characterized in that** the middle part (4) is coupled to the side parts (5, 6) by coupling means.

5. Wind deflector according to one of the preceding claims, **characterized in that** two actuating means (17, 18, 19, 22, 23; 36-38; 40-42) for actuating the wind deflector (1) are present, in order to erect the latter into its operative position and lower it into its position of rest, one actuating means (17, 18, 22; 36-38; 40-42) being assigned to one side part and the other actuating means (17, 19, 23; 36-38; 40-42) to the other side part.

6. Wind deflector according to Claim 5, **characterized in that** the actuating means (17, 18, 19, 22, 23; 36-38; 40-42) engage on the side parts (5, 6).

7. Wind deflector according to Claim 5 or 6, **characterized in that** the actuating means (17, 18, 19, 22, 23) each have a rod assembly (18, 19).

8. Wind deflector according to one of Claims 5-7, **characterized in that** the actuating means (17, 18, 19, 22, 23; 36-38; 40-42) are connected to at least one drive.

9. Wind deflector according to Claim 4 and one of Claims 5-8, **characterized in that** the actuating means (36-38; 40-42) are additionally configured as coupling means.

10. Wind deflector according to Claim 9, **characterized in that** the actuating means (17, 18, 19, 22, 23; 36-38) each have a plurality of gearwheels (18, 19; 36-38) which engage one in the other and serve for the movement of one of the side parts (5, 6) and of the middle part (4).

11. Wind deflector according to Claim 9, **characterized in that** the actuating means (40-42) each have a rope which is guided via deflection pulleys (41, 42) and which serves for the movement of one of the side parts (5, 6) and of the middle part (4).

12. Wind deflector according to one of the preceding claims, **characterized in that** the side parts (5, 6) have operative surfaces (9, 10) which serve to ensure wind protection, and the side parts (5, 6) are configured such that their operative surfaces (9, 10) are rotatable in the direction of a forward direction of travel.

13. Convertible having a wind deflector (1) according to one of the preceding claims.

## Revendications

1. Pare-vent (1) pour un cabriolet, le pare-vent (1) étant un pare-vent (1) pluripartite doté d'une partie centrale (4) et de deux parties latérales (5, 6) comportant respectivement un châssis, les parties latérales (5, 6) étant fixées de façon pivotante au niveau de leur extrémité inférieure et de façon fixe sur place au niveau d'une carrosserie du cabriolet, ledit pare-vent (1) étant configuré de telle sorte qu'il peut être relevé dans une position active pour garantir une protection contre le vent et peut être rabaissé, à partir de sa position active, dans une position de repos, la partie centrale (4) d'une part et les deux parties latérales (5, 6) d'autre part étant configurées et disposées de telle sorte qu'elles peuvent être déplacées au moyen de différentes séquences de mouvement pour relever le pare-vent (1) dans sa position active et pour rabaisser le pare-vent (1) dans sa position de repos, **caractérisé en ce que** la partie centrale (4) comporte également un châssis dans lequel une image superficielle est tendue et que la partie centrale (4) est configurée et agencée de telle sorte que le relèvement du pare-vent (1) dans sa position active et l'abaissement du pare-vent (1) dans sa position de repos est réalisable par le biais d'un mouvement de translation.

2. Pare-vent selon la revendication 1, **caractérisé en ce que** les deux parties latérales (5, 6) sont disposées de façon pivotante, de sorte que le relèvement du pare-vent (1) dans sa position active et l'abaissement du pare-vent (1) dans sa position de repos est réalisable par le biais de mouvements de rotation.

3. Pare-vent selon la revendication 2, **caractérisé en ce que** les deux parties latérales (5, 6) sont configurées et disposées de telle sorte que le mouvement de rotation de la première partie latérale (5) peut être réalisé dans une direction opposée à une direction du mouvement de rotation de l'autre partie latérale (6).

4. Pare-vent selon l'une quelconque des revendications précédentes, **caractérisé en ce que** la partie centrale (4) est couplée aux parties latérales (5, 6) à l'aide de moyens d'accouplement.

5. Pare-vent selon l'une quelconque des revendications précédentes, **caractérisé en ce que** deux moyens d'actionnement (17, 18, 19, 22, 23 ; 36 à 38 ; 40 à 42) sont présents pour actionner le pare-vent (1), en vue de le relever dans sa position active et de le rabaisser dans sa position de repos, le premier moyen d'actionnement (17, 18, 22 ; 36 à 38 ; 40 à 42) étant associé à la première partie latérale et l'autre moyen d'actionnement (17, 19, 23 ; 36 à 38 ; 40 à 42) étant associé à l'autre partie latérale.

6. Pare-vent selon la revendication 5, **caractérisé en ce que** les moyens d'actionnement (17, 18, 19, 22, 23 ; 36 à 38 ; 40 à 42) s'engrènent au niveau des parties latérales (5, 6).

7. Pare-vent selon la revendication 5 ou 6, **caractérisé en ce que** les moyens d'actionnement (17, 18, 19, 22, 23) comportent respectivement une tringlerie (18, 19).

8. Pare-vent selon l'une quelconque des revendications 5 à 7, **caractérisé en ce que** les moyens d'actionnement (17, 18, 19, 22, 23 ; 36 à 38 ; 40 à 42) sont reliés à au moins un entraînement.

9. Pare-vent selon la revendication 4 et l'une quelconque des revendications 5 à 8, **caractérisé en ce que** les moyens d'actionnement (36 à 38 ; 40 à 42) sont en outre configurés comme des moyens d'accouplement.

10. Pare-vent selon la revendication 9, **caractérisé en ce que** les moyens d'actionnement (17, 18, 19, 22, 23 ; 36 à 38) comportent respectivement plusieurs roues dentées (18, 19 ; 36 à 38) s'engrenant les unes dans les autres et servant à déplacer un des éléments parmi les parties latérales (5, 6) et la partie centrale (4).

11. Pare-vent selon la revendication 9, **caractérisé en ce que** les moyens d'actionnement (40 à 42) comportent respectivement un câble guidé par l'intermédiaire de poulies de déviation (41, 42) et servant à déplacer un des éléments parmi les parties latérales (5, 6) et la partie centrale (4).

12. Pare-vent selon l'une quelconque des revendications précédentes, **caractérisé en ce que** les parties latérales (5, 6) comportent des surfaces actives (9, 10) servant à garantir la protection contre le vent et que les parties latérales (5, 6) sont configurées de telle sorte que leurs surfaces actives (9, 10) peuvent être tournées en direction d'une direction de conduite vers l'avant.

13. Cabriolet doté d'un pare-vent (1) selon l'une quelconque des revendications précédentes.
